# EUROPÄISCHE PATENTSCHRIFT

(11) **EP 2 151 356 B1**
(45) Veröffentlichungstag und Bekanntmachung des Hinweises auf die Patenterteilung: **20.06.2012**
(21) Anmeldenummer: 09005958.5
(22) Anmeldetag: 30.04.2009
(51) Int. Cl.: B60R 19/24, B62D 25/16, B62D 27/02

(54) **Einrichtung zum seitlichen Fixieren eines Bugteils an einem Kotflügel bei einem Kraftfahrzeug**
Device for attaching a nose section to a wing in a motor vehicle
Dispositif de fixation latérale d'une zone antérieure sur une aile d'un véhicule automobile

(30) Priorität: 06.08.2008 DE 102008036621
(43) Veröffentlichungstag der Anmeldung: 10.02.2010
(73) Patentinhaber: Dr. Ing. h.c. F. Porsche AG, 70435 Stuttgart (DE)
(72) Erfinder: Danev, Dimitar, 71272 Renningen (DE); Thoebel, Jens-Ole, 75449 Wurmberg (DE)

(56) Entgegenhaltungen:
- EP-B1- 0 720 935
- FR-A- 2 744 966
- GB-A- 2 281 260
- KR-A- 20010 065 454
- US-A- 4 895 405
- US-A- 5 061 108

## Beschreibung

Die Erfindung betrifft eine Einrichtung zum seitlichen Fixieren eines Bugteils an einem Kotflügel bei einem Kraftfahrzeug, insbesondere einem Personenkraftwagen, wobei das Bugteil in Fahrzeuglängsrichtung montiert wird.

Eine derartige Einrichtung, gemäß den Oberbegriff des Anspruchs 1, ist aus der EP 0 720 935 B1 bekannt. Bei dem Bugteil handelt es sich um einen Stoßfänger des Fahrzeugs. Um die die Karosserieecken des Fahrzeugs umgebenden Seitenteile des Stoßfängers präzise bezüglich der Kotflügel zu positionieren, sind zwischen Stoßfänger und Kotflügel Führungen vorgesehen, die den Stoßfänger beim Montieren in Fahrzeugquerrichtung und in Richtung der Fahrzeughochachse führen. Hierdurch ist sichergestellt, dass der Stoßfänger in seiner montierten Position eine definierte Stellung bezüglich des Kotflügels einnimmt.

Aufgabe der vorliegenden Erfindung ist es, eine andere Gestaltung einer Einrichtung zum seitlichen Fixieren eines Bugteils an einem Kotflügel anzugeben, die eine exakte Positionierung des montierten Bauteils bezüglich des Kotflügels gewährleistet, insbesondere ein exaktes Spaltmaß zwischen Bugteil und Kotflügel sicherstellt. Diese Einrichtung soll baulich einfach gestaltet sein, ohne wesentliche bauliche Veränderungen am Bugteil oder am Kotflügel vornehmen zu müssen.

Gelöst wird die Aufgabe bei einer Einrichtung der eingangs genannten Art dadurch, dass mit dem Bugteil ein Eckteil und mit dem Kotflügel eine Halteleiste für das Eckteil verbunden ist, wobei das Eckteil einen Vorsprung aufweist, der beim Montieren des Bugteils am Kotflügel in eine Führungskulisse der Halteleiste eingreift und von der Führungskulisse geführt wird, wobei der Vorsprung bei montiertem Bugteile eine definierte Endposition in der Führungskulisse einnimmt.

Erfindungsgemäß ist somit vorgesehen, dass die Verbindung von Bugteil und Kotflügel nicht unmittelbar erfolgt, sondern dass das Bugteil im Bereich der dem jeweiligen Kotflügel zugewandten Seite mit einem Eckteil verbunden ist und der jeweilige Kotflügel mit einer Halteleiste für das Eckteil verbunden ist. Eine besondere Gestaltung, die auf eine Befestigung des Bugteils am Kotflügel abgestimmt sein müsste, ist somit nicht erforderlich. Es kann die Gestaltung von Bauteil und Kotflügel weitgehend frei gewählt werden, da die Verbindung dieser Teile im Bereich des Eckteils und der Halteleiste erfolgt. Die Halteleiste dient insbesondere dem Lagern des Bugteils über das Eckteil im Bereich der zugeordneten Seite des Bugteils.

Im erfindungsgemäßen Sinne ist unter dem Begriff des Bugteils ein Bauteil zu verstehen, das die vordere Front des Fahrzeugs im unteren Bereich des Fahrzeugs und damit auch den hinter dem Bugteil angeordneten Stoßfänger verkleidet bzw. das durchaus Stoßfängerfunktion aufweisen kann. Dieses Bugteil ist insbesondere als Kunststoff-Formteil gestaltet. Es wird im vorderen Bereich des Fahrzeuges an der Karosserie oder dem Fahrzeugrahmen befestigt und ist seitlich über die erfindungsgemäßen Einrichtungen mit den Kotflügeln fixiert. Bei der Montage des Bugteils am Kotflügel ist einerseits von Bedeutung, dass der jeweilige seitliche Bereich des Bugteils am Kotflügel fixiert ist, andererseits diese Fixierung definiert erfolgt, so dass das exakte Spaltmaß zwischen Bugteil und Kotflügel sichergestellt ist.

Gemäß der Erfindung ist unter diesem Aspekt vorgesehen, dass über die Führungskulisse eine definierte Führung des Vorsprungs bzw. über den Vorsprung eine definierte Führung der Führungskulisse erfolgt. Diese Führungskulisse kann unterschiedlich gestaltet sein. Unter dem Aspekt der Einführung des Vorsprungs beim Montieren des Bugteils in die Führungskulisse, wird es als vorteilhaft angesehen, wenn die Führungskulisse mit einem konisch zulaufenden Einführbereich für den Vorsprung ausgebildet ist. Dies gestattet ein relativ unpräzises Heranführen des Bugteils an den Kotflügel. Beim weiteren Heranführen des Bugteils an den Kotflügel wird der Vorsprung durch die Führungskulisse quasi zentriert und dann zwangsgeführt. Hierzu kann die Führungskulisse, ausgehend von dem konisch zulaufenden Einführbereich, durchaus mit einem weiteren Kulissenabschnitt versehen sein, der gleichfalls konisch zulaufend ist, bis zu einer Bahnbreite, die geringfügig größer ist als die Erstreckung des Vorsprungs zwischen den seitlichen Begrenzungen der Führungskulisse. Unter diesem Aspekt wird es als vorteilhaft angesehen, wenn die Führungskulisse eine beidseitige Führung für den Vorsprung aufweist, wobei die Führung in einer Ebene erfolgt, die durch die Fahrzeuglängsrichtung und Fahrzeugquerrichtung gebildet ist.

Im erfindungsgemäßen Sinne kann der Vorsprung unterschiedlich gestaltet sein. Der Vorsprung stellt sich vorzugsweise als zylinderförmiger Stift oder zylinderförmiger Kulissenstein dar. Die Kulisse weist einen Schlitz, Steg oder insbesondere eine Nut auf, in dem bzw. in der der Zylinder bzw. der Kulissenstein beidseitig zwangsgeführt ist.

Die exakte seitliche Ausrichtung des Bugteils bzw. des mit dem Bugteil verbunden Eckteils zum Kotflügel bzw. zu der mit dem Kotflügel verbundenen Halteleiste lässt sich bereits dadurch erzielen, dass die Führungskulisse eine konisch zulaufende Führungsbahn bildet, wobei die Längsmittelachse der Führungsbahn gerade verläuft. In diesem Fall ergibt sich die exakte Ausrichtung des Vorsprungs aufgrund der konisch zulaufenden Führungsbahn und der beidseitigen Anlage des Vorsprungs an der Führungsbahn bei montiertem Bugteil. Gemäß einer alternativen Gestaltung ist vorgesehen, dass die Führungskulisse eine gekrümmte Führungsbahn bildet. Beim Bewegen des Vorsprungs entlang der gekrümmten Führungsbahn beim Montieren des Bugteils ergibt sich die definierte Endposition des Vorsprungs und damit des Bugteils relativ zum Kotflügel. Unter dem Aspekt der exakten Positionierung des Vorsprungs bezüglich der Führungskulisse bei montiertem Bugteil entspricht die Stärke der Führungsbahn der Führungskulisse in deren Endbereich der Außenabmessung des Vorsprungs, insbesondere einem Außendurchmesser des Vorsprungs.

Gemäß einer besonderen Ausführungsform der Erfindung ist vorgesehen, dass die Führungskulisse als Labyrinthführung mit einem konisch zulaufenden Einführbereich für den Vorsprung ausgebildet ist. Die Labyrinthführung bildet die gekrümmte Führungsbahn, die die exakte Positionierung des Vorsprungs bezüglich der Führungskulisse und damit die exakte Positionierung des Bugteils zum Kotflügel in Fahrzeuglängs- und - querrichtung gewährleistet.

Auf baulich besonders einfache Art und Weise lässt sich eine sichere Fixierung des Bugteils am Kotflügel erzielen, wenn die Kulissenführung mit einer aufweitbaren Engstelle versehen ist und der Vorsprung bei montiertem Bugteil hinter der Engstelle verrastet. Eine solche Gestaltung findet vorzugsweise dann Verwendung, wenn die Führungsbahn nicht gekrümmt, sondern ausschließlich konisch zulaufend ausgebildet ist. Insbesondere weist die Kulissenführung hinter der Engstelle eine solche Erstreckung auf, die gerade ausreicht, um den Vorsprung aufzunehmen.

Die Erfindung schlägt somit eine Führung des Bugteils bei der Montage am Kotflügel vor, mit der die Verformung des Bugteils definiert begleitet wird und das Bugteil in seiner Endposition fixiert wird. Eine bevorzugte erste Ausführungsform besteht in der Labyrinthführung, wobei eine größere, trichterförmige Einfahrschneise vorgesehen ist, die den zylinderförmigen Kulissenstein am Eckteil in seine Endposition führt. Durch entsprechend gebogene Ausgestaltung des Endbereichs des Labyrinths kann die Verrastung des Kulissensteins erreicht werden. Eine bevorzugte zweite Ausführungsform besteht darin, dass der Endbereich für den Kulissenstein durch die Engstelle begrenzt ist. Der Kulissenstein weitet diese Engstelle beim Einführen auf und wird dahinter verrastet.

Die beiden bevorzugten Ausführungsformen der Erfindung sind in der Zeichnung näher erläutert. Es zeigt:
- Fig. 1: eine Prinzipsskizze des vorderen, linken Bereiches einer PKW-Fahrzeugkarosserie mit teilweise dargestelltem Kotflü- gel und teilweise dargestelltem Bugteil sowie mit dem Kot- flügel verbundener Halteleiste und mit dem Bugteil verbun- denen Eckteil, das auf der Halteleiste aufliegt,
- Fig. 2: die am Kotflügel angebrachte Halteleiste, vor dem Aufschie- ben des bugteilfesten Eckteils auf die Halteleiste, in einer Draufsicht veranschaulicht,
- Fig. 3: die Anordnung gemäß Fig. 2, in einer Seitenansicht veran- schaulicht,
- Fig. 4: für die erste Ausführungsform der Erfindung eine räumliche Ansicht von Halteleiste und Eckteil, vor dem Aufsetzen und Montieren von Eckteil und Halteleiste,
- Fig. 5: in einer Draufsicht die Führungskulisse der in Fig. 4 gezeig- ten Halteleiste,
- Fig. 6 bis 8: unterschiedliche Montagezustände bei der Montage des Bugteils und damit der Positionierung des Eckteils bezüglich der Halteleiste, in einer Draufsicht veranschaulicht,
- Fig. 9: für die zweite Ausführungsform der Erfindung eine räumliche Ansicht von Halteleiste und Eckteil, vor dem Aufsetzen und Montieren von Eckteil und Halteleiste,
- Fig. 10: in einer Draufsicht die Führungskulisse der in Fig. 9 gezeig- ten Halteleiste,
- Fig. 11 und 12: unterschiedliche Montagezustände bei der Montage des Bugteils und damit der Positionierung des Eckteils bezüglich der Halteleiste, in einer Draufsicht veranschaulicht.

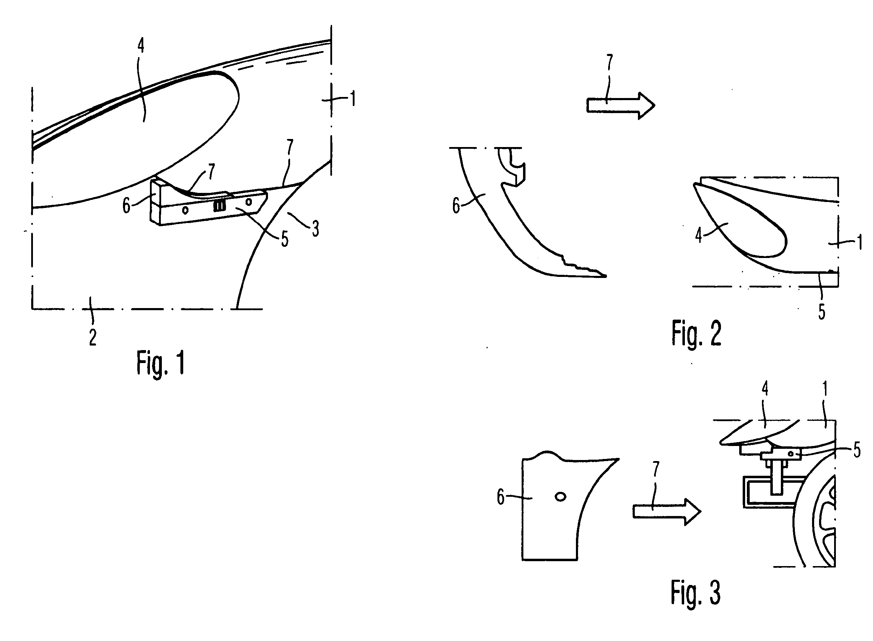

Fig. 1 veranschaulicht für den linken, vorderen Bereich eines Personenkraftwagens dessen Kotflügel 1 und dessen seitlichen Bereich eines Bugteils 2. Mit der Bezugsziffer 3 ist der Radkastenausschnitt bezeichnet, der durch das Bugteil 2 und den Kotflügel 1 begrenzt wird. In diesem seitlichen Bereich ist, vorne, durch eine Aussparung am Kotflügel 1 und im Bugteil 2, eine Öffnung 4 zur Aufnahme eines nicht gezeigten Scheinwerfers gebildet.

Mit veranschaulicht sind in dieser Außenansicht des Fahrzeugbereichs die Bauelemente, die der Lagerung und Verbindung von Kotflügel 1 und Bugteil 2 im seitlichen Bereich des PKW dienen und auf der Innenseite angeordnet sind. Es handelt sich um eine fest mit dem Kotflügel 1 verbundene Halteleiste 5 und ein mit dem Bugteil 2 fest verbundenes Eckteil 6.

Zum Montieren des Bugteils 2 an den beiden vorderen Kotflügeln wird das Bugteil 2 in Richtung der in den Fig. 2 und 3 veranschaulichten Pfeile 7, somit in Fahrzeuglängsrichtung montiert. Hierbei wird das jeweilige Eckteil 6 auf die zugeordnete Halteleiste 5 aufgelegt und in die in Fig. 1 gezeigte Endstellung verschoben. In dieser ist das Bugteil 2 exakt bezüglich des Kotflügels 1 positioniert, so dass sich ein exaktes Spaltmaß, veranschaulicht durch den Spalt 7 zwischen Bugteil 2 und Kotflügel 1 ergibt.

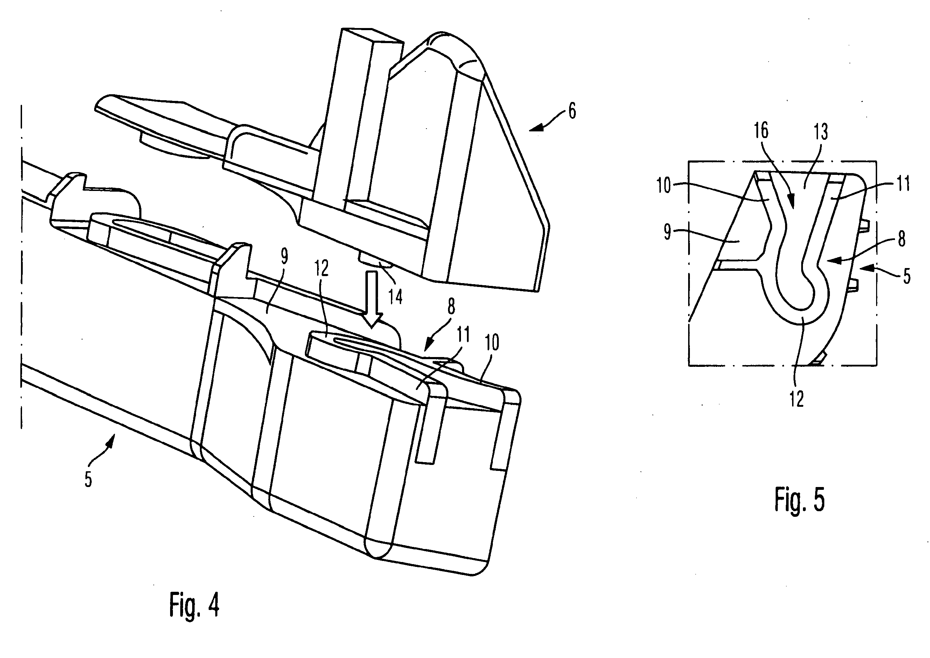

Die Fig. 4 bis 8 veranschaulichen die erste Ausführungsform von Halteleiste 5 und Eckteil 6 zwecks exakter Positionierung des montierten Bugteils 2 bezüglich des Kotflügels 1.

Wie der Darstellung der Fig. 4 und 5 zu entnehmen ist, ist die Halteleiste 5 oben mit einer Führungskulisse 8 versehen, die eine Labyrinthführung bildet. Die Führungskulisse 8 ist durch zwei sich über die obere Deckfläche 9 hinauserstreckende Schenkel 10 und 11 und einen diese verbindenden Steg 12 gebildet, die zwischen sich eine Führungsbahn 16 der Führungskulisse 8 bilden. Ausgehend von dem dem Steg 12 abgewandten Ende der Führungskulisse 8 verlaufen die Schenkel 10 und 11 konvergierend und bilden damit zwischen diesen Schenkelbereichen eine trichterförmige Einfahrschneise 13.

An diese konvergierenden Schenkelabschnitte erschließen sich parallele Schenkelabschnitte an, wobei der Abstand der Schenkel 10 und 11 in diesem Bereich geringfügig größer ist als der Durchmesser eines Vorsprunges 14 des Eckteils 4. Dieser Vorsprung 14, bei dem es sich somit um einen zylinderförmigen Kulissenstein handelt, ist in der Führungskulisse 8 geführt. Die Bewegungsrichtung des Vorsprungs 4 beim Durchlaufen der Führungskulisse 8 ist durch die Anordnung der Schenkel 10 und 11 sowie des Steges 12 vorgegeben. Wird der Vorsprung 14 über die parallelen Abschnitte der Schenkel 10 und 11 weiter entlang der Führungskulisse 8 verschoben, erfolgt das Verfahren des Vorsprungs 14 entlang der Krümmung der Führungskulisse 8 in den dem Steg 12 zugewandten Endbereich der Führungskulisse.

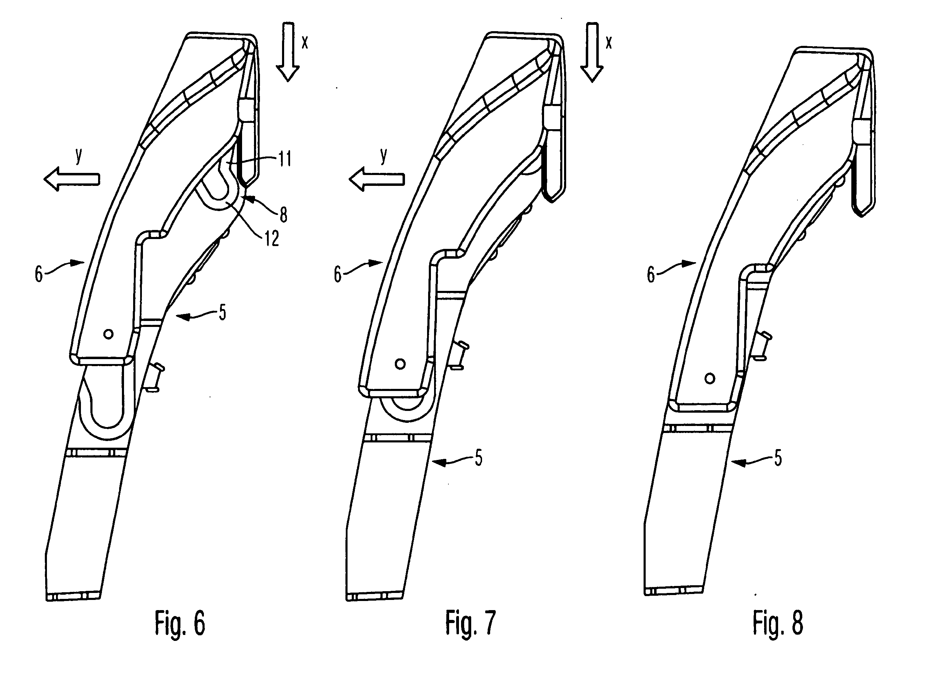

Die Montage des Bugteils 2 am Kotflügel 1 ist in den Fig. 6 bis 8 unter Berücksichtigung der Darstellung der Fig. 4 und 5 dargestellt: Bei Auflage des Eckteils 6 auf der Halteleiste 5 wird der Vorsprung 14 im Bereich der Einfahrschneise 13 zwischen die konvergierenden Abschnitte der Schenkel 10 und 11 eingeführt, in Richtung der Darstellung des Pfeiles X in Fig. 6. Aufgrund der schräg nach außen gerichteten Anordnung des Schenkels 11 zur Pfeilrichtung X wird beim Aufschieben des Eckteils 6 auf die Halteleiste 5 das Eckteil 6 mit einer Komponente gemäß Pfeil Y in Fig. 6 nach außen geführt, womit sich das Bugteil 2 geringfügig nach außen verformt. Beim weiteren Aufschieben des Bugteils 2 auf den Kotflügel 1, somit dem weiteren Relatiwerschieben von Eckteil 6 bezüglich der stationären Halteleiste 5, gelangt der Vorsprung 14 in den Bereich der parallelen Abschnitte der Schenkel 10 und 11. Hier nimmt das Maß der Verformung des Bugteils 2 nach außen ab. Gelangt der Vorsprung 14 in den dem Steg 12 zugeordneten, zum Fahrzeuginneren hin gebogenen Bereich der Führungskulisse 8, wird das Bugteil 2 über das Eckteil 6 entsprechend der dortigen Gestaltung der Führungskulisse 8 nach innen gezogen, in die in Fig. 8 gezeigte Endposition des Eckteils 6 und damit des Bugteils 2. In dieser Endposition liegt der Vorsprung 14 am Steg 12 und den beiden Schenkeln 10 und 11 an, womit das Eckteil 6 und damit das Bugteil 2 in X- und Y-Richtung durch die Führungskulisse 8 in der Halteleiste 5 und damit dem Kotflügel 1 fixiert ist. Das Bugteil 2 hat in dieser Position seine Endstellung erreicht.

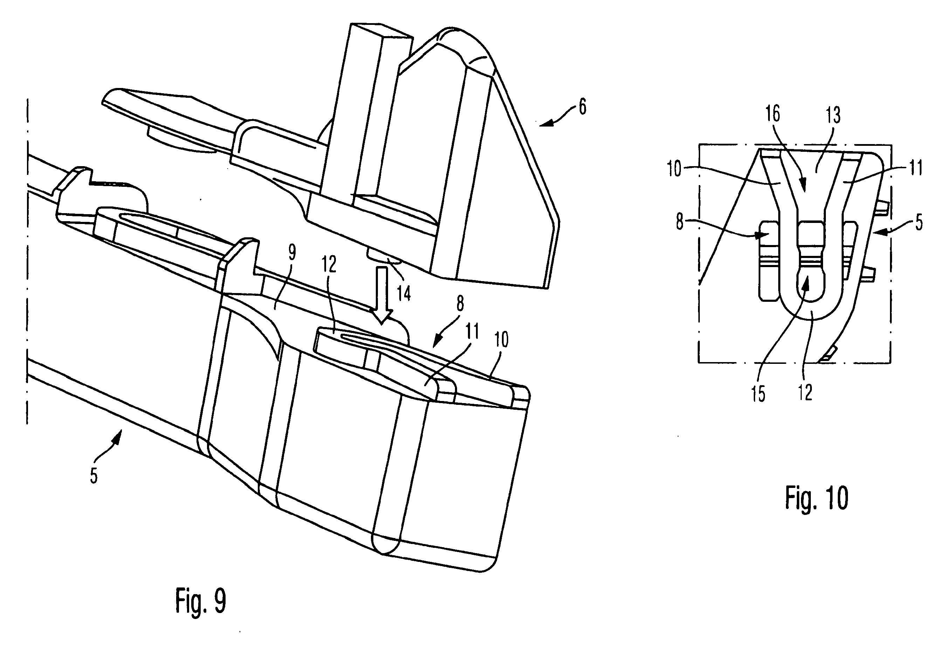

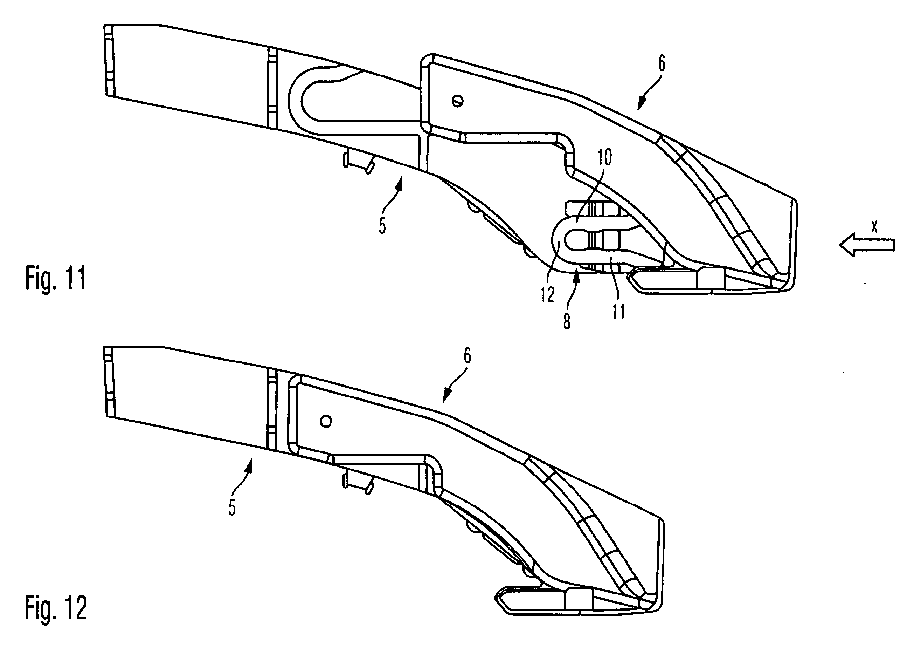

Die zweite Ausführungsform der Erfindung, die in den Fig. 9 bis 12 veranschaulicht ist, unterscheidet sich von der Ausführungsform nach den Fig. 1 bis 8 nur durch die Gestaltung der Führungskulisse 8. Diese Führungskulisse 8 ist symmetrisch zur Aufsteckrichtung X des Eckteils 6 gestaltet, mit den konvergierenden Abschnitten der Schenkel 10 und 11, den parallelen Abschnitten der Schenkel 10 und 11 sowie dem die parallelen Abschnitte verbindenden Steg 12. Allerdings ist die Führungskulisse 9 im Bereich der parallelen Abschnitte der Schenkel 10 und 11 mit einer Engstelle 15 versehen. Beim Aufschieben des Bugteils 2 auf den Kotflügel 1, somit dem Verschieben des Eckteils 6 relativ zur Halteleiste 5 nach dem Aufsetzen des Eckteils 6 auf die Halteleiste 5, wird, ausgehend von der Position nach Fig. 11, der zylinderförmige Vorsprung 14 in die Einführschneise 13 eingeführt, in Richtung des Pfeiles X. Der Vorsprung 14 gelangt beim weiteren Verschieben des Eckteils 6 zentriert in den Bereich der Engstelle 15, weitet beim weiteren Verschieben diese auf und gelangt schließlich in den vorderen Endbereich der Führungskulisse 8, der durch den Steg 12 die angrenzenden Bereiche der Schenkel 10 und 11 sowie die rückfedernde Engstelle 15 begrenzt ist. Der Steg 12 bzw. der Kulissenstein verrastet somit hinter der Engstelle 15.

## Patentansprüche

1. Einrichtung zum seitlichen Fixieren eines Bugteils (2) an einem Kotflügel (1) bei einem Kraftfahrzeug, insbesondere einem Personenkraftwagen, wobei das Bugteil (2) in Fahrzeugfängsrichtung montiert wird, wobei mit dem Bugteil (2) ein Eckteil (6) und mit dem Kotflügel (1) eine Halteleiste (5) für das Eckteil (6) verbunden ist, wobei das Eckteil (6) einen Vorsprung (14) aufweist, der beim Montieren des Bugteils (2) am Kotflügel (1) in eine Führungskulisse (8) der Halteleiste (5) eingreift und von der Führungskulisse (8) geführt wird, wobei der Vorsprung (14) beim montiertem Bugteil (2) eine definierte Endposition in der Führungskulisse (8) einnimmt, **dadurch gekennzeichnet, dass** der Vorsprung (14) als zylinderförmiger Kulissenstein ausgebildet ist, wobei die Führungskulisse (8) eine beidseitige Führung (Schenkel 10, 11) für den Vorsprung (14) aufweist, wobei die Führung in einer Ebene erfolgt, die durch die Fahrzeuglängsrichtung (X) und die Fahrzeugquerrichtung (Y) gebildet ist und die Verformung des Bugteils bei der Montage definiert begleitet und das Bugteil in seiner Endposition fixiert wird.

2. Einrichtung nach Anspruch 1, **dadurch gekennzeichnet, dass** die Führungskulisse (8) eine Führungsbahn (16) bildet, die gekrümmt gestaltet ist.

3. Einrichtung nach einem der Ansprüche 1 bis 2, **dadurch gekennzeichnet, dass** die Führungskulisse (8) eine Führungsbahn (16) bildet, die konisch zulaufend gestaltet ist.

4. Einrichtung nach einem der Ansprüche 1 bis 3, **dadurch gekennzeichnet, dass** die Führungskulisse (8) als Labyrinthführung mit einem konisch zulaufenden Einführbereich (13) für den Vorsprung (14) ausgebildet ist.

5. Einrichtung nach einem der Ansprüche 1 bis 4, **dadurch gekennzeichnet, dass** die Stärke der Führungsbahn (16) der Führungskulisse (8) in deren Endbereich der Außenabmessung, insbesondere dem Außendurchmesser des Vorsprungs (14) entspricht.

6. Einrichtung nach einem der Ansprüche 1 bis 5, **dadurch gekennzeichnet, dass** die Kulissenführung (8) mit einer aufweitbaren Engstelle (15) versehen ist und der Vorsprung (14) bei montiertem Bugteil (2) hinter der Engstelle (15) verrastet.

## Claims

1. Device for laterally fixing a nose section (2) to a wing (1) in a motor vehicle, in particular a passenger vehicle, wherein the nose section (2) is mounted in the longitudinal direction of the vehicle, wherein a corner part (6) is connected to the nose section (2) and a holding strip (5) for the corner part (6) is connected to the wing (1), wherein the corner part (6) has a projection (14) which, during the fitting of the nose section (2) to the wing (1), engages in a guide slot (8) in the holding strip (5) and is guided by the guide slot (8), wherein, when the nose section (2) is fitted, the projection (14) takes up a defined end position in the guide slot (8), **characterized in that** the projection (14) is designed as a cylindrical sliding block, the guide slot (8) having a guide on both sides (limbs 10, 11) for the projection (14), the guiding taking place in a plane which is formed by the longitudinal direction (X) of the vehicle and the transverse direction (Y) of the vehicle and accompanying the deformation of the nose section during installation in a defined manner and the nose section being fixed in the end position thereof.

2. Device according to Claim 1, **characterized in that** the guide slot (8) forms a guide track (16) which is of curved design.

3. Device according to either of Claims 1 and 2, **characterized in that** the guide slot (8) forms a guide track (16) which is of conically tapering design.

4. Device according to one of Claims 1 to 3, **characterized in that** the guide slot (8) is designed as a labyrinth guide with a conically tapering insertion region (13) for the projection (14).

5. Device according to one of Claims 1 to 4, **characterized in that** the thickness of the guide track (16) of the guide slot (8) in the end region thereof corresponds to the external size, in particular the external diameter of the projection (14).

6. Device according to one of Claims 1 to 5, **characterized in that** the slotted guide (8) is provided with an expandable narrow point (15) and the projection (14) latches behind the narrow point (15) when the nose section (2) is fitted.

## Revendications

1. Dispositif de fixation latérale d'une zone antérieure (2) sur une aile (1) d'un véhicule automobile, en particulier d'un véhicule léger, la zone antérieure (2) étant montée dans la direction longitudinale du véhicule, une partie de coin (6) étant connectée à la zone antérieure (2) et une garniture de fixation (5) pour la partie de coin (6) étant connectée à l'aile (1), la partie de coin (6) présentant une saillie (14), qui, lors du montage de la zone antérieure (2) sur l'aile (1), vient en prise dans une coulisse de guidage (8) de la garniture de fixation (5) et est guidée par la coulisse de guidage (8), la saillie (14), lorsque la zone antérieure (2) est montée, adoptant une position d'extrémité définie dans la coulisse de guidage (8), **caractérisé en ce que** la saillie (14) est réalisée sous forme de coulisseau cylindrique, la coulisse de guidage (8) présentant un guidage bilatéral (branches 10, 11) pour la saillie (14), le guidage s'effectuant dans un plan qui est formé par la direction longitudinale du véhicule (X) et la direction transversale du véhicule (Y), et accompagnant la déformation de la zone antérieure lors du montage de manière définie, et la zone antérieure étant fixée dans sa position finale.

2. Dispositif selon la revendication 1, **caractérisé en ce que** la coulisse de guidage (8) forme une voie de guidage (16) de forme courbe.

3. Dispositif selon l'une quelconque des revendications 1 à 2, **caractérisé en ce que** la coulisse de guidage (8) forme une voie de guidage (16) se terminant sous forme conique.

4. Dispositif selon l'une quelconque des revendications 1 à 3, **caractérisé en ce que** la coulisse de guidage (8) est réalisée sous forme de guidage en labyrinthe avec une région d'entrée (13) se terminant sous forme conique pour la saillie (14).

5. Dispositif selon l'une quelconque des revendications 1 à 4, **caractérisé en ce que** l'épaisseur de la voie de guidage (16) de la coulisse de guidage (8) correspond dans la région d'extrémité à la dimension extérieure, en particulier au diamètre extérieur de la saillie (14).

6. Dispositif selon l'une quelconque des revendications 1 à 5, **caractérisé en ce que** la coulisse de guidage (8) est munie d'un rétrécissement (15) pouvant être élargi, et la saillie (14) s'encliquète par l'arrière dans le rétrécissement (15) lorsque la zone antérieure (2) est montée.
